# EUROPÄISCHE PATENTANMELDUNG

(11) **EP 4 375 546 A1**
(43) Veröffentlichungstag der Anmeldung: **29.05.2024**
(21) Anmeldenummer: 23210150.1
(22) Anmeldetag: 15.11.2023
(51) Int. Cl.: F16K 11/07, F16K 3/316

(54) **HYDRAULISCHER STEUERSCHIEBER MIT INTEGRALER VERDREHSICHERUNG, HYDRAULIKVENTIL UND HERSTELLVERFAHREN**

(30) Priorität: 28.11.2022 DE 102022212663
(71) Anmelder: Robert Bosch GmbH, 70442 Stuttgart (DE)
(72) Erfinder: Endres, Andreas, 97854 Steinfeld (DE); Dittrich, Karsten, 97080 Wuerzburg (DE); Ebert, Dominik, 97762 Hammelburg (DE); Mehling, Andreas, 97840 Hafenlohr (DE)

(57) **Zusammenfassung**

Die vorliegende Offenbarung betrifft einen hydraulischen Steuerschieber (2), der in einer Gehäusebohrung (3) eines Hydraulikventils (1) längsverschieblich angeordnet ist und einen Mittelabschnitt mit einer Anzahl an Steuerkanten und zwei Endabschnitte (6) aufweist, die jeweils zu beiden Seiten des Mittelabschnitts angeordnet sind. Einer der Endabschnitte (6) weist eine nach radial außen vorstehende Steuerschieber-integrale Nase (10) auf.

## Beschreibung

Die die vorliegende Offenbarung betrifft einen hydraulischen Steuerschieber mit einer integralen Verdrehsicherung, ein Hydraulikventil mit dem hydraulischen Steuerschieber und ein Herstellverfahren für den hydraulischen Steuerschieber.

Herkömmliche Hydraulikventile weisen ein Ventilgehäuse oder einen Ventilblock auf, in dem ein Steuerschieber in einer Gehäusebohrung längsverschieblich angeordnet ist. Der Steuerschieber ist dabei durch eine aus einem Aktor erzeugte aufgebrachte Kraft bewegbar bzw. schaltbar, beispielsweise eine Magnetkraft resultierend aus der Paarung einer Magnetspule und einem Polrohr. Der Steuerschieber weist dabei eine Anzahl an Steuerkanten auf, die entlang einer Längsachse des Steuerschiebers nebeneinander angeordnet sind. Die Steuerkanten werden durch die Längsbewegung des Steuerschiebers bewegt und geben dadurch Ventilanschlüsse in dem Ventilgehäuse frei bzw. decken diese ab. So kann das Hydraulikventil zwischen verschiedenen Schaltstellungen bewegt bzw. geschaltet werden.

Da eine Rotation des Steuerschiebers um die Längsachse relativ zu dem Ventilgehäuse ungewollt ist, weist der Steuerschieber eine Verdrehsicherung auf. Bei bekannten Hydraulikventilen wird vor der Montage des Steuerschiebers ein Spannstift in eine Bohrung an einem Endabschnitt des Steuerschiebers eingepresst. Dieser Spannstift wird in einer Führungshülse bzw. einer Führungsnut in dem Polrohr geführt und verhindert dadurch eine ungewollte Rotation des Steuerschiebers.

Die Länge der Führungsnut ist durch den maximal möglichen axialen Verfahrweg des Steuerschiebers in der Gehäusebohrung bestimmt.

Die Verwendung des eingepressten Spannstifts weist eine Anzahl an Nachteilen auf. Zum einen ist durch das Einpressen des Spannstifts in die Bohrung des Steuerschiebers ein separater Montageschritt notwendig. Ferner muss der Spannstift beim Einpressen in Richtung der Nutanlagefläche ausgerichtet sein, um Verschleiß oder Abrasion in der Nut gering zu halten. Wird der Spannstift falsch eingepresst, muss dieser wieder entfernt und ein neuer Spannstift eingepasst werden. Langzeitversuche haben ferner gezeigt, dass die Kombination aus Führungsnut und dem Spannstift starkem Verschleiß ausgesetzt ist oder bei ausreichend hoher Belastung zerstört werden kann.

Deshalb ist es die Aufgabe der vorliegenden Offenbarung, die Nachteile des Standes der Technik zu überkommen oder zu mindern und insbesondere einen hydraulischen Steuerschieber bereitzustellen, der effektiv gegen Rotation um seine Längsachse geschützt ist, bei gleichzeitig geringem Montageaufwand und hoher Lebensdauer des Steuerschiebers.

### Zusammenfassung der Offenbarung

Diese Aufgabe wird durch einen hydraulischen Steuerschieber gemäß den Merkmalen des Anspruchs 1 gelöst. Die Aufgabe der vorliegenden Erfindung wird ferner durch ein Hydraulikventil gemäß den Merkmalen des Anspruchs 6 und ein Herstellverfahren gemäß den Merkmalen des Anspruchs 7 gelöst.

Die vorliegende Offenbarung betrifft einen hydraulischen Steuerschieber, der in einer Gehäusebohrung eines Hydraulikventils längsverschieblich bzw. beweglich angeordnet ist. Der Steuerschieber weist einen Mittelabschnitt mit einer Anzahl an Steuerkanten und zwei Endabschnitte auf, die jeweils zu beiden Seiten des Mittelabschnitts angeordnet sind. Offenbarungsgemäß weist einer der Endabschnitte eine radial nach außen vorstehende Steuerschieber-integrale Nase auf. Die Steuerschieber-integrale Nase kann dabei vorzugsweise als Verdrehsicherung in einer Führungsnut eines Polrohrs aufgenommen sein.

Steuerschieber-integral heißt in diesem Zusammenhang, dass die Nase ein (integraler) Bestandteil des Steuerschiebers ist. Steuerschieber-integral heißt dabei insbesondere, dass die Nase und der Steuerschieber in dem gleichen Fertigungsschritt gefertigt werden und dass die Nase nicht nachträglich oder in einem separaten Fertigungs- oder Montageschritt an den Steuerschieber montiert wird. Die Nase ist dabei insbesondere aus dem gleichen Material wie der Steuerschieber gefertigt. Also ist die Nase ein gemeinsames Bauteil wie der Steuerschieber.

In einer Gehäusebohrung eines Hydraulikventils bzw. eines Schaltventils ist der Steuerschieber entlang der Längsachse bewegbar gelagert. Das Polrohr ist dabei vorzugsweise in die Gehäusebohrung des Ventilgehäuses eingeschraubt. Der Steuerschieber weist einen Schieberkolben auf, der sich entlang der Längsachse erstreckt. Von dem Schieberkolben stehen in radialer Richtung die Anzahl an Steuerkanten hervor, die in Längsrichtung des Schieberkolbens nebeneinander angeordnet sind. Der Schieberkolben weist die zwei Endabschnitte auf, die sich jeweils neben den Steuerkanten erstrecken.

Die Nase steht dabei radial aus dem Querschnitt oder Durchmesser des Schieberkolbens vor. D.h. die Nase springt aus der Grundform des Schieberkolbens in radiale Richtung hervor.

Der offenbarungsgemäße Steuerschieber weist dabei die folgenden Vorteile auf. Die Nase hat dabei die Funktion einer Verdrehsicherung, die eine ungewollte Rotation des Steuerschiebers relativ zu dem Steuerzylinder verhindert. Durch die Bauteilintegrale Ausgestaltung der Nase entfällt ein Montageschritt. Das spart Einkauf- und Montagekosten. Durch die Ausgestaltung der Nase als integrales Bauteil des Schieberkolbens kann besonders eine hohe Verschleißfestigkeit der Nase gewährleistet werden. Somit wird die Belastungsresistenz des Steuerschiebers erhöht bzw. die Ausfallwahrscheinlichkeit reduziert.

Die Aufgabe der vorliegenden Erfindung wird ferner durch ein Hydraulikventil gelöst. Das Hydraulikventil weist ein Ventilgehäuse und einen Steuerschieber auf, der in der Gehäusebohrung des Ventilgehäuses bewegbar gelagert ist. Der Steuerschieber weist eine Verdrehsicherung auf, die nach radial außen aus dem Steuerschieber vorsteht und in einer Führungsnut eines Polrohrs, das in der Gehäusebohrung des Ventilgehäuses montiert ist, aufgenommen ist und die eine Rotation des Steuerschiebers um die Längsachse relativ zu dem Ventilgehäuse bzw. Gehäusebohrung verhindert. Die Verdrehsicherung ist dabei als die Steuerschieber-integrale Nase ausgeführt.

Das Hydraulikventil mit der Steuerschieber-integralen Nase weist dabei insbesondere eine hohe Festigkeit gegen Verschleiß an der Kontaktfläche zwischen der Führungsnut und der Steuerschieber-integralen Nase auf. Ferner kann durch die Ausführung der Nase als integraler Bestandteil des Steuerschiebers ein Fertigungsschritt eingespart werden.

Die vorliegende Offenbarung betrifft ferner ein Herstellverfahren für einen Steuerschieber gemäß den vorstehenden Aspekten. Das Herstellverfahren weist die folgenden Schritte auf. Zuerst wird der Steuerschieber aus einem Rohmaterial spanend gefertigt, insbesondere gefräst. In diesem Schritt wird insbesondere die Nase des Steuerschiebers als ein integraler Bestandteil des Steuerschiebers spanend gefertigt, insbesondere gefräst. In einem weiteren Schritt wird der spanend gefertigte Steuerschieber wärmebehandelt, insbesondere gehärtet.

Es ist natürlich denkbar, dass der Schritt der spanenden Fertigung auch ein Drehen des Steuerschiebers sein kann.

Durch das offenbarungsgemäße Herstellungsverfahren kann ein Montageschritt, nämlich das Einpressen des separaten Spannstifts eingespart werden. Das spart Zeit und Kosten. Ferner kann durch die Wärmebehandlung des Steuerschiebers eine hohe (Oberflächen-)Härte des Materials erzeugt werden. Dadurch kann insbesondere die Verschleißfestigkeit erhöht werden.

Vorteilhafte Weiterbildungen der vorliegenden Offenbarung sind Gegenstand der beigefügten Unteransprüche.

Nach einem optionalen vorteilhaften Aspekt der vorliegenden Offenbarung kann die Steuerschieber-integrale Nase von einer Endkante des Steuerschiebers beabstandet sein. Vorzugsweise ist die Nase 1 mm von der Endkante beabstandet. Dadurch kann sichergestellt werden, dass die Steuerschieber-integrale Nase beim Schalten des Hydraulikventils, also beim Verschieben des Steuerschiebers, nicht aus der Führungsnut ausfädelt.

Vorzugsweise kann sich die Steuerschieber-integrale Nase in Längsrichtung des Steuerschiebers erstrecken.

Nach einem weiteren optionalen Aspekt der vorliegenden Offenbarung kann die Steuerschieber-integrale Nase zwischen 2 mm und 6 mm, besonders bevorzugt 4 mm, lang sein. Die längliche Erstreckung der Steuerschieber-integralen Nase verhindert ein Ausfädeln aus der Führungsnut.

Vorzugsweise kann die Steuerschieber-integrale Nase zwischen 1 mm und 3 mm, besonders bevorzugt 2 mm, breit sein. Die Breite der Steuerschieber-integralen Nase kann im Wesentlichen an die Breite der Führungsnut angepasst sein.

Nach einem weiteren optionalen Aspekt der vorliegenden Offenbarung kann die Steuerschieber-integrale Nase zwischen 1 mm und 3 mm, besonders bevorzugt 1,7 mm, radial aus dem Endabschnitt hervorstehen.

Vorzugsweise kann der Schritt des Wärmebehandelns des Steuerschiebers ein Induktionshärten beinhalten oder sein. Dabei können insbesondere ausschließlich die Steuerkanten gehärtet werden. Induktionshärten kann durch das zielgenaue Härten nur eines vorbestimmten Bereiches eine hohe Genauigkeit und nur geringen Materialverzug aufweisen. D. h. es kann zielgenau die Stelle, die eine hohe Oberflächenhärte benötigt, gehärtet werden, ohne dass sich der Rest des Bauteils durch die Wärme Einbringung verzieht. Insbesondere eine Versprödung der Abschnitte des Bauteils, bei denen eine Zähigkeit bzw. eine leichte Deformierbarkeit vorteilhaft ist, kann durch das zielgenaue Induktionshärten verhindert werden.

Nach einem weiteren optionalen Merkmal der vorliegenden Offenbarung kann der Schritt des Wärmebehandelns des Steuerschiebers ein Ofenhärten beinhalten oder aufweisen. Durch das Ofenhärten wird der gesamte Steuerschieber gleichmäßig erhitzt. Das minimiert mögliche Spannungsbildung in dem Bauteil. Durch das Ofenhärten wird ferner die komplette Oberfläche des Steuerschiebers gehärtet und somit die Oberflächenhärte erhöht. Das mindert Verschleiß beim Schalten des Hydraulikventils.

Ofenhärten kann sich ferner durch kurze Durchlaufzeiten der einzelnen Bauteile und durch ein vorteilhaftes Handling der Bauteile auszeichnen. Die Bearbeitungskosten pro Stück können beim Ofenhärten geringgehalten werden.

Vorzugsweise kann der Schritt des Wärmebehandelns des Steuerschiebers ein Carbonitrieren aufweisen. Dadurch kann die Oberflächenhärte des Steuerschiebers erhöht werden.

Nach einem weiteren optionalen Merkmal der vorliegenden Offenbarung kann der Schritt der spanenden Fertigung des Steuerschiebers in zwei Schritte unterteilt werden. Zuerst kann ein Steuerschieber-Rohling aus dem Rohmaterial gedreht werden. Der Steuerschieber-Rohling kann insbesondere im Bereich der Endabschnitte ein Übermaß aufweisen. Aus dem Steuerschieber-Rohling mit dem Übermaß kann dann in einem nächsten Schritt der Steuerschieber mit der Steuerschieber-integralen Nase gefräst werden. Die Kontur bzw. Form der Steuerkanten kann dabei auch gefräst werden. Durch die spanende Fertigung kann der Steuerschieber kostengünstig und formgenau hergestellt werden.

### Kurzbeschreibung der Figuren

Fig. 1 zeigt einen Ausschnitt eines Längsabschnitts durch ein Hydraulikventil gemäß dem Stand der Technik;
Fig. 2 zeigt eine perspektivische Ansicht eines hydraulischen Steuerschiebers gemäß dem Stand der Technik mit einem separaten Spannstift;
Fig. 3 zeigt einen Ausschnitt eines Längsschnitts durch ein Hydraulikventil gemäß der vorliegenden Offenbarung;
Fig. 4 zeigt eine perspektivische Ansicht eines Steuerschiebers gemäß der vorliegenden Offenbarung;
Fig. 5 zeigt eine perspektivische Ansicht eines Endabschnitts des Steuerschiebers gemäß der vorliegenden Offenbarung; und
Fig. 6 zeigt ein Ablaufdiagramm eines Herstellerverfahrens gemäß der vorliegenden Offenbarung.

### Detaillierte Beschreibung der Figuren

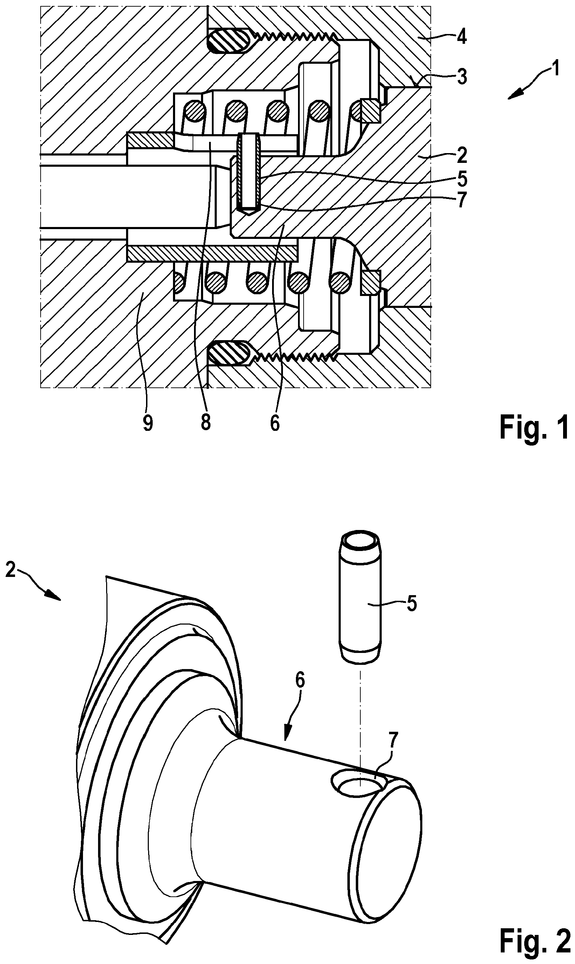

Fig. 1 zeigt einen Längsschnitt durch ein Hydraulikventil 1 gemäß dem Stand der Technik. Ein hydraulischer Steuerschieber 2 ist beweglich in einer Gehäusebohrung 3 eines Ventilgehäuses oder Ventilblocks 4 des Hydraulikventils 1 angeordnet. Der Steuerschieber 2 weist einen Spannstift 5 auf, der in einem Endabschnitt 6 des Steuerschiebers 2 in eine Bohrung 7 im Endabschnitt 6 eingepresst ist und der radial aus dem Querschnitt des Endabschnitts 6 hervorsteht. Der Spannstift 5 ist in einer Führungsnut oder einer Führungshülse 8 eines Polrohrs 9 aufgenommen und axial geführt, dass in das Ventilgehäuse 4 bzw. die Gehäusebohrung 3 montiert ist. Die Kombination des Spannstifts 5 und der Führungsnut 8 ergeben eine Verdrehsicherung, die eine ungewollte Rotation des Steuerschiebers 2 relativ zu der Gehäusebohrung 3 verhindert. Das beispielhafte Hydraulikventil 1 ist durch eine Feder vorgespannt.

Fig. 2 zeigt den Endabschnitt 6 gemäß dem Stand der Technik. Der Endbereich des Steuerschiebers weist die Bohrung 7 auf, in die der Spannstift 5 gepresst wird. Das Einpressen des Spannstifts 5 in die Bohrung 7 wird in einem eigenen Montageschritt ausgeführt. Die Ausführung der Verdrehsicherung als der eingepresste Spannstift 5 hat also die folgenden Nachteile. Das Einpressen des Spannstifts 5 ist ein zusätzlicher Fertigungs-bzw. Montageschritt. Durch die kleine Baugröße des Spannstifts 5 kann der Spannstift 5 falsch eingepresst werden. Ferner ist die Kontaktfläche zwischen dem Spannstift 5 und der Führungsnut 8 beim Schalten des Hydraulikventils 1 anfällig für Verschleiß.

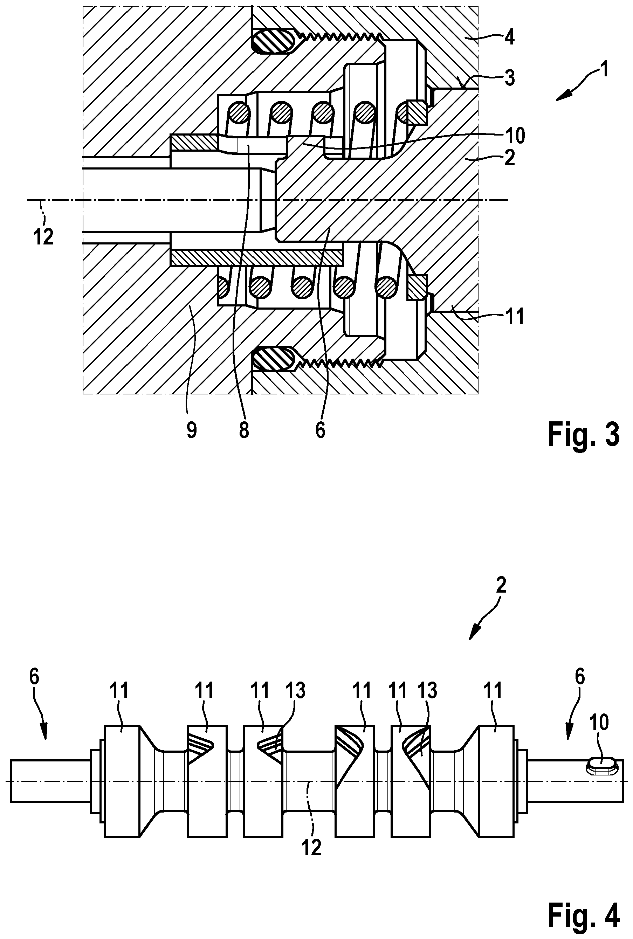

Fig. 3 zeigt einen Längsschnitt durch ein Hydraulikventil 1 mit einem Steuerschieber 2 gemäß der vorliegenden Offenbarung. Das Hydraulikventil 1 weist das Ventilgehäuse oder den Ventilblock 4 mit der Gehäusebohrung 3 auf. Der Steuerschieber 2 ist in der Gehäusebohrung 3 des Ventilgehäuses 4 beweglich gelagert. Das Ventilgehäuse 4 bzw. die Gehäusebohrung 3 nimmt das Polrohr 9 auf, durch das die axiale Bewegung des Steuerschiebers 2 begrenzt ist. Der Endabschnitt 6 des Steuerschiebers 1 ist beweglich in dem Polrohr 9 aufgenommen. Dafür weist das Polrohr 9 eine längliche Führungsnut bzw. eine Führungshülse 8 auf, die sich in Längsrichtung des Steuerzylinders 2 erstreckt. In der Führungsnut 8 ist eine Verdrehsicherung des Steuerschiebers 2 aufgenommen. Bei der Verdrehsicherung handelt es sich dabei um eine Steuerschieber-integrale Nase 10, die aus dem Endabschnitt 6 des Steuerschiebers 2 radial hervorsteht. Die Breite der Steuerschieber-integralen Nase 10 ist an die Breite der Führungsnut 8 angepasst, sodass die Nase 10, axial beweglich in der Führungsnut 8 aufgenommen ist, aber eine Rotation des Steuerschiebers 2 um eine Längsachse 12 des Steuerschiebers 2 relativ zu der Führungsnut 8 durch die Nase 10 verhindert wird.

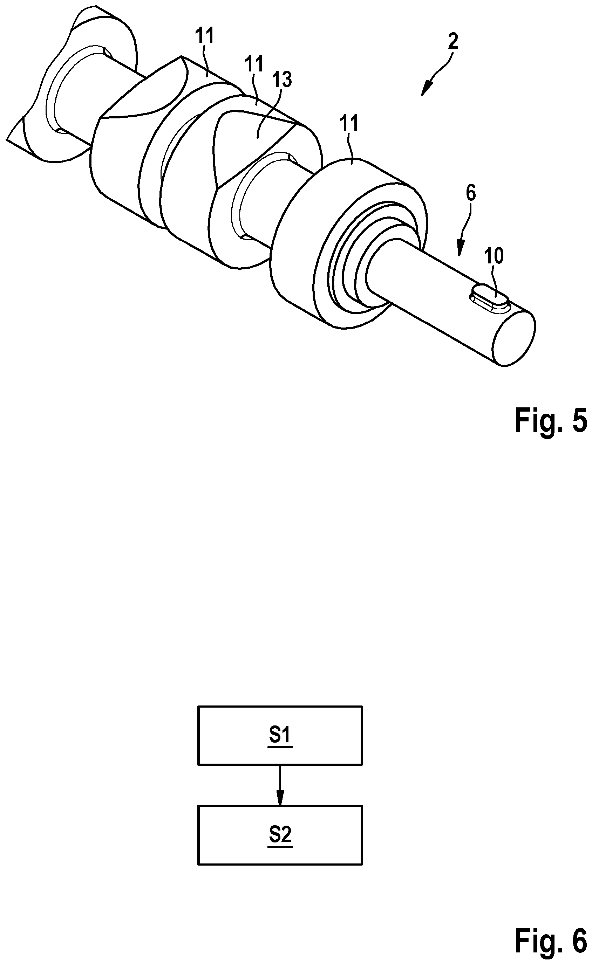

Fig. 4 zeigt eine perspektivische Ansicht des Steuerschiebers 2. Der Steuerschieber 2 weist einen Mittelabschnitt und die zwei Endabschnitte 6 auf. In dem Mittelabschnitt ist eine Anzahl an Steuerkanten 11 nebeneinander angeordnet. Die Steuerkanten 11 stehen jeweils radial aus einem Grundriss des Steuerschiebers 2 hervor. Die beiden Endabschnitte 6 sind jeweils an einem axialen Ende des Mittelabschnitts angeordnet, also außerhalb der Steuerkanten 11 angeordnet. Aus einem Endabschnitt steht dabei die Steuerschieber-integrale Nase 10 radial hervor, die eine Verdrehsicherung darstellt. Fig. 5 zeigt eine Seitenansicht des Endabschnitts 6 mit der Steuerschieber-integralen Nase 10.

Die Steuerkanten 11 sind nicht rotationssymmetrisch ausgebildet, sondern können Steuerfenster 13 aufweisen. Die Kontur der Steuerkanten 11 bzw. der Steuerfenster 13 bedingt dabei das Steuerverhalten des Hydraulikventils 1. Da die Aussparungen nicht rotationssymmetrisch ausgebildet sind, könnte eine Rotation des Steuerschiebers 2 um seine Längsachse 12 relativ zur Gehäusebohrung 3 eine Veränderung des Steuerverhaltens hervorrufen. Durch Rotation des Steuerschiebers 2 um seine Längsachse 12 entsteht abrasiver Verschleiß an den Kontaktflächen zwischen Steuerschieber 2 und Gehäusebohrung 3, dies führt zu einem festsetzen des Steuerschiebers 2 in der Gehäusebohrung 3 und somit zu einem Funktionsausfall des Hydraulikventils 1. Daher ist die Rotation des Steuerschiebers 2 um seine Längsachse 12 ungewollt. Die Kombination aus der Steuerschieber-integralen Nase 10 und der Führungsnut 8, in der die Steuerschieber-integrale Nase 10 aufgenommen ist, stellen deshalb eine Verdrehsicherung dar.

Fig. 6 zeigt ein Ablaufdiagramm eines Herstellverfahrens des Steuerschiebers 2. In Schritt S1 wird der Steuerschieber 2 spanend aus einem Rohmaterial oder Rohling gefertigt. Dabei wird im gleichen Schritt die Steuerschieber-integrale Nase 10 als integraler Bestandteil des Steuerschiebers 2 ebenfalls spanend gefertigt. Die spanende Bearbeitung ist dabei vorzugsweise ein Fräsen oder ein Drehen. In Schritt S2 wird der spanend gefertigte Steuerschieber 2 wärmebehandelt, um eine hohe Oberflächenhärte zu realisieren. Vorzugsweise ist der Schritt der Wärmebehandlung ein Härten. Besonders bevorzugt ist das Härten ein Induktionshärten oder ein Ofenhärten. Beim Induktionshärten kann ein bestimmter Abschnitt des Steuerschiebers 2 gehärtet werden. Dabei werden insbesondere die Steuerkanten 11 gehärtet. Die Steuerschieber-integrale Nase 10 wird dabei nicht gehärtet, um eine Versprödung und damit eine Verminderung der Zähigkeit zu verhindern.

Schritt S1 kann in zwei Unterschritte aufgeteilt sein. Aus dem Rohling kann zuerst eine grobe Grundform des Steuerschiebers durch Drehen gefertigt werden. Anschließend können dann die Konturen der Steuerkanten 11 und die Steuerschieber-integrale Nase 10 gefräst werden.

### Bezugszeichenliste

- 1: Hydraulikventil
- 2: Steuerschieber
- 3: Gehäusebohrung
- 4: Ventilgehäuse
- 5: Spannstift
- 6: Endabschnitt
- 7: Bohrung
- 8: Führungsnut
- 9: Polrohr
- 10: Steuerschieber-integrale Nase
- 11: Steuerkanten
- 12: Längsachse
- 13: Steuerfenster

## Patentansprüche

1. Hydraulischer Steuerschieber (2), der in einer Gehäusebohrung eines Hydraulikventils (1) längsverschieblich angeordnet ist und einen Mittelabschnitt mit einer Anzahl an Steuerkanten (11) und zwei Endabschnitte (6) aufweist, die jeweils zu beiden Seiten des Mittelabschnitts angeordnet sind,
**dadurch gekennzeichnet, dass**
einer der Endabschnitte (6) eine nach radial außen vorstehende Steuerschieber-integrale Nase (10) aufweist.

2. Steuerschieber (2) nach Anspruch 1, **dadurch gekennzeichnet, dass** die Steuerschieber-integrale Nase (10) von einer Endkante des Steuerschiebers (2) beabstandet ist, vorzugsweise 1 mm von der Endkante beabstandet ist.

3. Steuerschieber (2) nach Anspruch 1 oder 2, **dadurch gekennzeichnet, dass** sich die Steuerschieber-integrale Nase (10) in Längsrichtung des Steuerschiebers (2) erstreckt.

4. Steuerschieber (2) nach Anspruch 3, **dadurch gekennzeichnet, dass** die Steuerschieber-integrale Nase (10) zwischen 2 mm und 6 mm, besonders bevorzugt 4 mm, lang und/oder zwischen 1 mm und 3 mm, besonders bevorzugt 2 mm, breit ist.

5. Steuerschieber (2) nach einem der Ansprüche 1 bis 4, **dadurch gekennzeichnet, dass** die Steuerschieber-integrale Nase (10) zwischen 1 mm und 3 mm, besonders bevorzugt 1,7 mm, radial aus dem Endabschnitt (6) hervorsteht.

6. Hydraulikventil (1) mit einem Ventilgehäuse (4) und einem Steuerschieber (2), der in einer Gehäusebohrung (3) des Ventilgehäuses (4) entlang einer Längsachse (12) bewegbar gelagert ist,
wobei der Steuerschieber (2) eine Verdrehsicherung aufweist, die nach radial außen aus dem Steuerschieber (2) vorsteht und in einer Führungsnut (8) eines am Ventilgehäuse (4) montierten Pohlrohrs (9) aufgenommen ist und eine Rotation des Steuerschiebers (2) um die Längsachse (12) relativ zu dem Ventilgehäuse (4) verhindert,
**dadurch gekennzeichnet, dass**
die Verdrehsicherung eine Steuerschieber-integrale Nase (10) ist.

7. Herstellverfahren für einen Steuerschieber (2) für ein Hydraulikventil (1) mit den Schritten:
- Spanende Bearbeitung, insbesondere Fräsen, des Steuerschiebers (2) aus einem Rohmaterial, wobei eine Steuerschieber-integrale Nase (10) des Steuerschiebers (2) als integraler Bestandteil spanend ausgearbeitet, insbesondere gefräst, wird;
- Wärmebehandeln, insbesondere Härten, des spanend gefertigten Steuerschiebers (2).

8. Herstellverfahren nach Anspruch 7, **dadurch gekennzeichnet, dass** der Schritt der spanenden Bearbeitung ein Drehen eines Steuerschieber-Rohlings aus dem Rohmaterial, vorzugsweise mit einem Übermaß des Steuerschieber-Rohlings, und ein anschließendes Fräsen der Steuerkanten (11) und der Steuerschieber-integralen Nase (10) aus dem gedrehten Steuerschieber-Rohling aufweist.

9. Herstellverfahren nach Anspruch 7 oder 8, **dadurch gekennzeichnet, dass** der Schritt des Wärmebehandelns des Steuerschiebers (2) ein Ofenhärten, vorzugsweise ein Carbonitrieren, des Steuerschiebers (2) aufweist.

10. Herstellverfahren nach Anspruch 7, **dadurch gekennzeichnet, dass** der Schritt des Wärmebehandelns des Steuerschiebers (2) ein Induktionshärten aufweist, wobei insbesondere ausschließlich Steuerkanten (11) des Steuerschiebers (2) gehärtet werden.
